# EUROPÄISCHE PATENTANMELDUNG

(11) **EP 2 022 633 A2**
(43) Veröffentlichungstag der Anmeldung: **11.02.2009**
(21) Anmeldenummer: 08013884.5
(22) Anmeldetag: 02.08.2008
(51) Int. Cl.: B41F 33/00, B41F 35/00

(54) **Sensorvorrichtung und Druckmaschine mit einer Sensorvorrichtung**

(30) Priorität: 07.08.2007 DE 102007037254
(71) Anmelder: manroland AG, 63012 Offenbach (DE)
(72) Erfinder: Meisel, Michael, 81549 München (DE); Mey, Olaf, 80809 München (DE)
(74) Vertreter: Ulrich, Thomas

(57) **Zusammenfassung**

Es wird eine Sensorvorrrichtung (1) zur Erfassung von Istgrößen in einer Druckmaschine mit wenigstens einem Sensor (2) vorgeschlagen. Der Sensor (2) weist zumindest auf seiner detektierenden Oberfläche eine Antihaft-Nanobeschichtung (ANB) auf und/oder dem Sensor (2) ist ein Schutzglas (3) zugeordnet, auf welchem zumindest auf einer in Detektionsrichtung weisenden Oberfläche eine Antihaft-Nanobeschichtung (ANB) aufgebracht ist.

## Beschreibung

Die Erfindung betrifft eine Sensorvorrichtung zur Erfassung von Istgrößen in einer Druckmaschine mit wenigstens einem Sensor. Des Weiteren betrifft die Erfindung auch eine Druckmaschine mit einer derartigen Sensorvorrichtung.

Auf dem Gebiet von Druckmaschinen werden Sensoreinrichtungen für die Erfassung verschiedenster Größen eingesetzt. Beispielsweise ist das positionsgenaue Aufbringen eines Druckbildes auf eine ablaufende Papierbahn von großer Bedeutung für die Druckqualität. Da ein versetztes Drucken oder ein optisch schlechtes Druckbild sehr leicht vom Betrachter des Druckerzeugnisses wahrgenommen wird, kann dies als sehr störend empfunden werden. Um dies zu verhindern, sind bereits aus dem Stand der Technik verschiedenste Lösungen vorgeschlagen worden. Beispielsweise werden Registermarken und Passermarken eingesetzt, um den Farbpasser der verschiedenen Druckeinheiten zueinander zu regeln als auch das Register zwischen Schön- und Widerdruck. Die Auswertung kann dabei manuell durch den Bediener der Druckmaschine, mittels Messeinrichtungen außerhalb der Druckmaschine oder in der Druckmaschine mittels Sensoreinrichtungen erfolgen.

Beispielsweise auf derartige Sensoreinrichtungen richtet sich die vorliegende Erfindung.

Andere gattungsgemäße Sensoreinrichtungen zum Einsatz in Druckmaschinen überwachen beispielsweise die Lage oder Drehzahl von Walzen, wie z.B. Druck-, Form- oder Übertragwalzen, um die Einzelantriebe der entsprechenden Walzen zur Papierbahn zu synchronisieren. Weitere gattungsgemäße Sensoreinrichtungen dienen zur Erfassung der Bahnlage, der Bahndehnung, im Falzwerk zur Zählung der Falzexemplare oder in Bogendruckmaschinen auch zur Erfassung der Übergabe der Papierbögen von einem Druckwerk zum nächsten.

Im Allgemeinen wird die Druckmaschine auf Basis der ermittelten Messergebnisse entsprechend kalibriert bzw. neu eingestellt oder geregelt, so dass ein fehlerfreies Drucken möglich ist. Die hierfür eingesetzten Sensoren sind beispielsweise optische Sensoren z.B. auf Basis von Kameras, Lichtschranken, Lasertaster oder Infrarotsensoren; Ultraschallsensoren; induktive Sensoren; kapazitive Sensoren; Piezo-Sensoren oder auch pneumatische Sensoren.

Dabei stellt sich das Problem, dass die eingesetzten Sensoreinrichtungen in der Druckmaschine Verschmutzungen ausgesetzt sind, wie beispielsweise im Bereich von stark staubenden Papieren, im Farbwerk durch Farbtropfen oder auch im Feuchtwerk durch feuchte Luft, die sich auf der Sensoreinrichtung niederlassen. Dies kann zu Fehlern bei der Erfassung von Istgrößen in den drucktechnischen Prozessen kommen, so dass die geforderte Qualität der Druckerzeugnisse nicht mehr gewährleistet werden kann. Im schlimmsten Fall kann die Sensoreinrichtung komplett ausfallen, was zu wirtschaftlichen Einbußen führen kann.

Gattungsgemäße Druckmaschinen, beispielsweise Rollenoffsetdruckmaschinen oder Bogenoffsetdruckmaschinen, sind allgemein bekannt, wobei die vorliegende Erfindung in allen derartigen Druckmaschinen Anwendung finden kann.

Die der Erfindung zugrunde liegende Aufgabe besteht nun darin, die oben angegebenen Nachteile bei bisher bekannten Sensoreinrichtungen zu verhindern und eine Sensorvorrichtung für eine Druckmaschine sowie eine Druckmaschine zu schaffen, mit denen die Druckqualität gleichbleibend hoch gehalten werden kann.

Diese Aufgabe wird hinsichtlich der Sensorvorrichtung mit den Merkmalen des Anspruchs 1 gelöst, hinsichtlich der Druckmaschine mit den Merkmalen des Anspruchs 11 bzw. durch die in Anspruch 13 angegebene Verwendung.

Erfindungsgemäß wird diese Aufgabe dadurch gelöst, dass der wenigstens eine Sensor der Sensorvorrichtung zumindest auf seiner detektierenden Oberfläche bzw. einer der zu detektierenden Größe zugewandten Oberfläche bzw. einer in Detektionsrichtung weisenden Oberfläche eine Antihaft-Nanobeschichtung aufweist und/oder dem Sensor ein Schutzglas zugeordnet ist, auf welchem zumindest auf einer der zu detektierenden Größe zugewandten und dem Sensor abgewandten Oberfläche bzw. auf seiner in Detektionsrichtung weisenden Oberfläche eine Antihaft-Nanobeschichtung aufgebracht ist.

Unter einer Nanobeschichtung wird hier eine Beschichtung verstanden, deren Schichtdicke oder deren eigenschaftsgebende Füllstoffe eine Größe von 100 Nanometern nicht übersteigen. Durch die Beschichtung des Sensors direkt oder des Schutzglases vor dem Sensor mit einer Antihaft-Nanobeschichtung wird eine Oberfläche geschaffen, die antiadhäsiv wirkt und auf diese Weise ein Absetzen von Schmutzpartikeln, wie beispielsweise Wasser und Staub, verhindert. Somit können Verschmutzungen des Sensors vermieden und zu jeder Zeit eine genaue Erfassung von Istgrößen in einer Druckmaschine bei den technischen Prozessen vorgenommen werden. Dadurch steigt auch die Wirtschaftlichkeit einer mit der erfindungsgemäßen Sensorvorrichtung versehenen Druckmaschine erheblich.

Sollten sich dennoch kleinste Schmutzpartikel auf dem Sensor oder dem Schutzglas befinden, können diese vorteilhaft besonders einfach und schnell, beispielsweise mit Wasser, entfernt werden, ohne aggressive Mittel einsetzen zu müssen.

Besonders von Vorteil kann sein, wenn die Antihaft-Nanobeschichtung hydrophobe und/oder oleophobe Eigenschaften aufweist. Diese Eigenschaften können beispielsweise durch perfluorierte Silanverbindungen im Aufbau der Antihaft-Nanobeschichtung erzeugt werden. Diese Verbindungen erzeugen antiadhäsiv wirkende hydrophobe und oleophobe Schichten, die nicht nur wasserabweisend, sondern auch öl- und fettabweisend sind und dadurch eine erhöhte Schutzwirkung gegen die unterschiedlichsten Medien im Druckmaschinenbereich, wie zum Beispiel feuchte Luft, Farbtropfen, Staub, Säure oder ähnliche Schmutzpartikel, aufweisen. Weitere vorteilhafte Eigenschaften der Antihaft-Nanobeschichtung wären: schmutzabweisend; chemisch beständig; UV-beständig, kratz-unempfindlich.

Die Antihaft-Nanobeschichtung kann vorteilhafterweise eine insbesondere mittels chemischer Nanotechnologie hergestellte Nanopartikelschicht sein, die insbesondere mittels eines Sol-Gel-Prozesses hergestellt ist. Durch das Aufbringen von Nanopartikel, beispielsweise Silizium, auf die Oberfläche des Sensors und/oder auf die Oberfläche des Schutzglases wird eine nanorauhe, nicht fühlbare, längs-und quervernetzte offenporöse Gitterstruktur erzeugt, die sich molekular mit der Oberfläche verbindet. Die somit erzeugte Schicht auf der Oberfläche ist sehr viel stabiler und widerstandsfähiger als andere Beschichtungen.

Insbesondere bei Verwendung von optischen Sensoren sollte die Antihaft-Nanobeschichtung optisch neutrale Eigenschaften aufweisen, so dass die Schicht transparent ist. Um dies zu gewährleisten ist es wichtig, dass die Nanopartikel der Antihaft-Nanobeschichtung eine Größe kleiner 300 nm aufweisen, was durch die erfindungsgemäße Antihaft-Nanobeschichtung, die Füllstoffe einer Größe von unter 100 nm bis zu einigen Nanometern aufweist, gewährleistet.

Erfindungsgemäß kann außerdem vorgesehen sein, dass dem Sensor eine Drucklufteinrichtung zugeordnet ist, die zur Reinigung der detektierenden Oberfläche des Sensors und/oder der Oberfläche des Schutzglases vorgesehen ist. Mittels einer Drucklufteinrichtung kann ein schneller Luftstrom erzeugt werden, der zum Wegblasen von Schmutzpartikeln und Flüssigkeiten/Fluiden verwendet werden kann.

Eine Druckmaschine mit einer erfindungsgemäßen Sensorvorrichtung ist im Anspruch 11 angegeben, wobei die Sensorvorrichtung vorteilhaft in einem Farbwerk und/oder in einem Feuchtwerk, insbesondere im Bereich von Druck-, Form-, Film-oder Farbwalzen und/oder im Bereich einer Papierbahn angeordnet sein kann.

Eine Verwendung der erfindungsgemäßen Sensorvorrichtung ergibt sich in Druckmaschinen zur Herstellung von Druckerzeugnissen.

Weitere vorteilhafte Ausgestaltungen der Erfindung ergeben sich aus den restlichen Unteransprüchen. Dabei lassen sich die vorstehend genannten und die nachstehend noch zu erläuternden Merkmale der Erfindung nicht nur in der in den Ansprüchen angegebenen Kombination, sondern auch in anderen Kombinationen verwenden, ohne den Rahmen der Erfindung zu verlassen.

Die Erfindung wird nachfolgend anhand eines Ausführungsbeispiels näher erläutert.

Die Figuren zeigen:
- Figur 1: einen Ausschnitt aus einem Druckwerk einer Druckmaschine mit einer erfindungsgemäßen Sensorvorrichtung, und
- Figur 2: ein Schutzglas mit einer Antihaft-Nanobeschichtung für einen Sensor.

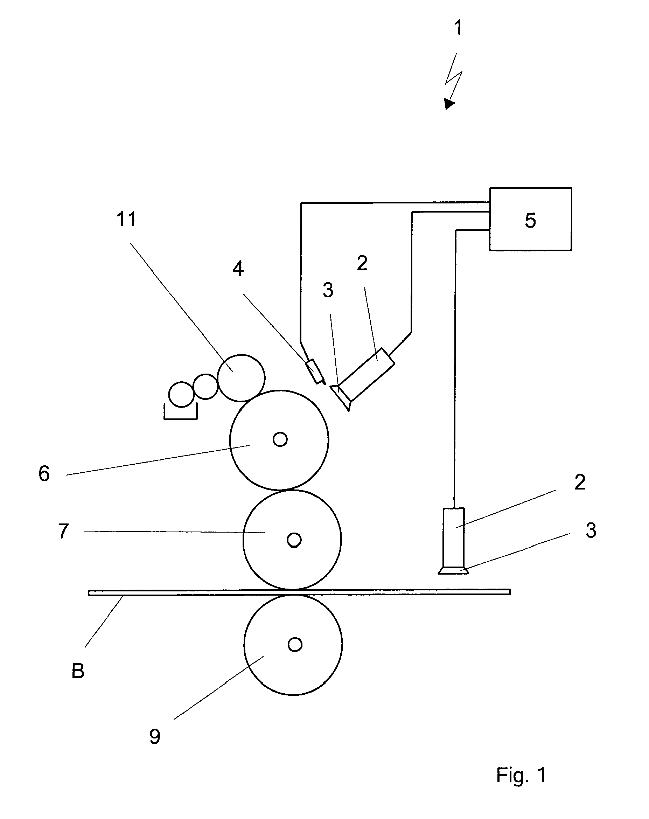

Die Figur 1 zeigt schematisch ein Druckwerk einer Druckmaschine in Seitenansicht, welches rein beispielhaft als Dreizylinderdruckwerk ausgebildet ist, wobei die Druckmaschine auch andere oder mehrere Druckwerke aufweisen kann. Das Druckwerk der Druckmaschine weist eine Gegendruckwalze 9, eine auf die Gegendruckwalze 9 abrollende Gummituch- bzw. Übertragungswalze 7, eine auf die Gummituch- bzw. Übertragungswalze 7 abrollende Formwalze 6 bzw. Plattenzylinder 6, ein Farbwerk mit Farbwalzen 11 und ein nicht dargestelltes Feuchtwerk mit Feuchtauftragswalzen auf. Die Formwalze 6 und die Gummituchwalze 7 werden, wie in modernen Druckmaschinen, zumindest häufig jeweils über nicht dargestellte Einzelantriebe angetrieben. Zur genauen Synchronisation der Walzen 6 und 7 zueinander und zu einer Papierbahn ist in der Druckmaschine wenigstens eine Sensorvorrichtung 1 vorgesehen, die zur Erfassung von die Lagen oder Drehzahl wiedergebenden Istgrößen während der drucktechnischen Prozesse eingesetzt wird. Als Istgröße könnte beispielsweise eine Skala auf dem Walzenumfang per Lichtreflexion abgelesen werden.

Wie in der Figur 1 erkennbar, werden die Ist- bzw. Messgrößen mittels Sensoren 2 erfasst und in elektrische Signale umgewandelt. Diese Signale werden dann einer Reglereinrichtung 5 übermittelt, die die Signale verstärkt, und jeweils nicht dargestellten Stelleinrichtungen zugeführt. Diese Stelleinrichtungen regeln dann nach Vergleich der entsprechenden ermittelten Istgröße mit der Sollgröße beispielsweise die Lage einer Papierbahn B oder auch die Synchronisation der einzeln angetriebenen Walzen 6 und 7, wie in der Figur 1 gezeigt ist. Die Synchronisation kann dann beispielsweise durch Änderung der Drehzahl oder durch eine entsprechende Lageregelung der Walzen 6 und 7 ermöglicht werden. Selbstverständlich können auch andere Walzen, beispielsweise Druck-, Form- oder Filmwalzen, oder andere Bereiche in der Druckmaschine, wie z.B. im Falzwerk das Zählen der Falzexemplare, mittels der Sensorvorrichtung 1 beobachtet und geregelt werden. Das Zählen der Falzexemplare kann ebenfalls vorteilhaft über optische Sensoren erfolgen, beispielsweise mittels Laserstrahlung oder Infrarot-Strahlung.

Die Sensorvorrichtung 1 weist in diesem Ausführungsbeispiel zwei Sensoren 2 auf, wobei diese zur Erfassung von Lage- oder Drehzahl-Istgrößen dienen und zur Regelung der Walzenantriebe eingesetzt werden. Genauso gut kann die Erfindung jedoch bei anderen Sensoren, z.B. zur Erfassung von Abweichungen der Bahnlage, Passer- und Registerregelung usw., eingesetzt werden. Jedem Sensor 2 ist ein Schutzglas 3 zugeordnet, das vor Verschmutzungen der Sensoren 2 schützen soll. Das Schutzglas 3 kann zusätzlich als Filterglas (Spektralfilter, Farbfilter) oder als ein ähnliches optisches Element ausgebildet sein. Da jedoch ein derartiges Schutzglas 3 Oberflächen mit einem meist hydrophilen Benetzungszustand aufweist, ist die Verschmutzungsgefahr des Schutzglases 3 sehr hoch, wodurch es zu einer negativen Beeinflussung der Erfassung der Istgrößen kommen kann.

Um dies zu verhindern, ist auf dem Schutzglas 3 auf der dem Sensor 2 abgewandten Oberfläche eine Antihaft-Nanobeschichtung aufgebracht, die sowohl hydrophobe als auch oleophobe Eigenschaften besitzt. Die Oberfläche des Schutzglases 3 weist neben Wasser, auch Öle, Fette und Säuren ab und ist chemisch beständig, z.B. gegenüber chemischen Lösungsmitteln. Wassertropfen, Emulsionen, Farbtropfen oder auch andere Schmutzpartikel, wie beispielsweise Staub, können nicht an der Oberfläche des Schutzglases 3 haften bleiben, wodurch eine hohe Genauigkeit der Erfassung von Istgrößen gewährleistet werden kann.

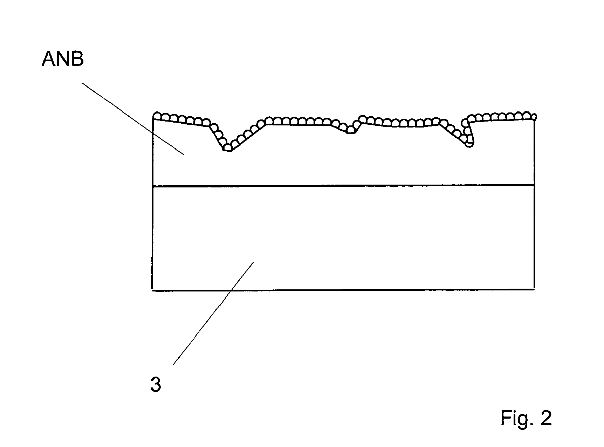

Die Antihaft-Nanobeschichtung kann vorteilhaft mittels chemischer Nanotechnologie hergestellt werden. In Figur 2 ist eine Antihaft-Nanobeschichtung ANB in Verbindung mit dem Schutzglas 3 im Querschnitt dargestellt. Ein geeignetes Verfahren zur Erzeugung einer derartigen Beschichtung ist beispielsweise der Sol-Gel-Prozess. Dieses Verfahren zur Deposition von Sol-Gel-Deckschichten dient zur gezielten Eigenschaftsmodifikation der Oberfläche von meist mit anderen Verfahren hergestellten Substraten. Die meist anorganischen Deckschichtwerkstoffe aus vernetzten Siloxanen oder anderen Alkoxyverbindungen werden durch den Sol-Gel-Prozess auf dem Substrat bzw. dem Grundwerkstoff, hier dem Schutzglas 3, abgeschieden. Geeignete Reaktionsbedingungen liefern in einem ersten Schritt nanometergroße Primärteilchen, die sich aufgrund gleichpoliger elektrischer Oberflächenladungen nicht zusammenballen. Das bedeutet, dass die Primärteilchen in einer organischen oder wässrigen Phase bzw. einer Lösemittelmischung aus beidem feinst dispergiert bleiben. Diese Sole lassen sich einige Zeit stabil halten. Im zweiten Schritt durchläuft die Schicht unter Wärmeeinwirkung durch Wasserdampfaufnahme einen Hydrolyseprozess. Hierbei entweicht insbesondere das Lösungsmittel in Kontakt mit dem Substrat aus den Solen. Die Primärteilchen werden unter Abspaltung von Wassermolekülen weiter vernetzt, wodurch es zur Gelbildung kommt. Danach wird das Substrat mit dem Gel in einem Ofen bei einigen hundert Grad Celsius getempert. Dabei entweicht das Restwasser und aus dem Gel wird schließlich ein hochvernetzter und kompakter Schichtwerkstoff.

Diese so erzielten Oberflächeneigenschaften bewirken ein vermindertes Anhaften von Schmutzpartikeln. Als Folge davon kann die Oberfläche auch einfacher und leichter gereinigt werden. Um ein Reinigen der Oberfläche des Schutzglases 3 vorzunehmen, kann eine Drucklufteinrichtung 4 verwendet werden, die durch Entspannen der Luft in einer Düse einen schnellen Luftstrom erzeugt, der zum Wegblasen bzw. Entfernen der Schmutzpartikel verwendet wird. Die Drucklufteinrichtung 4 kann dabei in der Nähe der Sensoren 2 in der Druckmaschine angeordnet sein, wobei selbstverständlich auch alternativ dazu die Sensoren 2 und/oder das Schutzglas 3 ausgebaut und in einer separat zu der Druckmaschine angeordneten Drucklufteinrichtung 4 gereinigt werden können. Auch andere Reinigungseinrichtungen sind zur Säuberung des Schutzglases 3 einsetzbar, wobei beispielsweise Wasser als Reinigungsmittel verwendet werden kann. Alternativ eignet sich jedoch jeder Schmutzabtrag, je nachdem welcher Verschmutzungsgrad vorliegt. Hierbei ist jedoch zu beachten, dass bei einer reinen Luftreinigung superhydrophobe Eigenschaften der Antihaft-Beschichtung gefordert sind, die nur mit Hybridprodukten realisiert werden können. Für die Herstellung von organisch-anorganischen Hybrid-Schichten werden ähnliche Ausgangschemikalien eingesetzt wie für die Sole zur Abscheidung oxydkeramischer Schichten. Dazu können beispielsweise neben Alkoholaten organisch modifizierte Silane verwendet werden.

Neben dem Aufbringen der Antihaft-Nanobeschichtung ANB auf das Schutzglas 3 der optischen Sensoren 2 kann diese selbstverständlich auch direkt auf die Sensoroberfläche aufgebracht sein. Diese Möglichkeit ist insbesondere bei pneumatischen Abtastsensoren, induktiven Sensoren, oder bei Sensoren mit Berührung des zu detektierenden Objekts von Vorteil. Auch bei diesen Sensoren mit direkt aufgebrachter Antihaft-Nanobeschichtung ANB liegt der große Vorteil in den hydrophoben, oleophoben und schmutzabweisenden Eigenschaften der mit der Antihaft-Nanobeschichtung ANB versehenen Oberfläche.

Eine in der Sensorvorrichtung 1 angeordnete Lichtquelle bei optischen Sensoren 2 kann ebenfalls mit einer Antihaft-Nanobeschichtung ANB versehen sein, wobei der Lichtquelle zugeordnete optische Elemente zur Fokussierung des Lichtstrahls ebenso auf der der Lichtquelle abgewandten Oberfläche mit einer Antihaft-Nanobeschichtung ANB versehen sein können, so dass diese auch vor Verschmutzungen durch Wasser, Farbtropfen, Staub oder ähnlichen Schmutzpartikeln geschützt sind.

Die Sensoren 2 der Sensorvorrichtung 1 können quer zu einem zu detektierenden Objekt, beispielsweise der Bahnlage, verschiebbar angeordnet sein, so dass die Sensoren 2 an einen bestimmten Messort positioniert werden können. Es ist selbstverständlich auch möglich, die Sensoren starr in der Druckmaschine, beispielsweise im Bereich einer Walze, um die Geschwindigkeit der Walze zu erfassen, anzuordnen. Auch ist es möglich, die Sensorvorrichtung 1 außerhalb der Druckmaschine anzuordnen, wobei dann ein verwendetes Schutzglas 3 mit einer Antihaft-Nanobeschichtung ANB in einer Öffnung einer Wand der Druckmaschine eingesetzt sein kann.

Der Sensor 2 der Sensorvorrichtung 1 kann dabei vorteilhaft als optischer Sensor, insbesondere als CCD-Sensor, als Infrarot-Sensor oder auch als optoelektronischer Sensor, ausgebildet sein. Selbstverständlich sind andere Sensoren ebenfalls möglich.

Die Sensorvorrichtung 1 weist somit Sensoren 2 mit einer Antihaft-Nanobeschichtung ANB direkt auf ihren Oberflächen und/oder Sensoren 2 mit einem mit einer Antihaft-Nanobeschichtung ANB versehenem Schutzglas 3 und/oder eine Lichtquelle mit einer Antihaft-Nanobeschichtung ANB und/oder optische Elemente mit einer Antihaft-Nanobeschichtung ANB auf, wobei die Antihaft-Nanobeschichtung ANB zusammenfassend folgende vorteilhafte Eigenschaften aufweist:
- hydrophob
- oleophob
- schmutzabweisend
- chemische Beständigkeit
- UV-Beständigkeit
- Temperaturbeständigkeit bis 250 °C
- hohe Kratzfestigkeit
- optisch neutral.

Durch weitere Beeinflussung des Benetzungsverhaltens der Antihaft-Nanobeschichtung lässt sich beispielsweise noch das Beschlagen insbesondere des Schutzglases 3 verringern.

Selbstverständlich sind Abweichungen von der dargestellten und beschriebenen Ausführungsform möglich, ohne den Grundgedanken der Erfindung zu verlassen.

## Patentansprüche

1. Sensorvorrrichtung (1) zur Erfassung von Istgrößen in einer Druckmaschine mit wenigstens einem Sensor (2), **dadurch gekennzeichnet, dass** der Sensor (2) zumindest auf seiner detektierenden Oberfläche eine Antihaft-Nanobeschichtung (ANB) aufweist und/oder dem Sensor (2) ein Schutzglas (3) zugeordnet ist, auf welchem zumindest auf einer in Detektionsrichtung weisenden Oberfläche eine Antihaft-Nanobeschichtung (ANB) aufgebracht ist.

2. Sensorvorrichtung (1) nach Anspruch 1, **dadurch gekennzeichnet, dass** die Antihaft-Nanobeschichtung (ANB) hydrophobe und/oder oleophobe Eigenschaften aufweist.

3. Sensorvorrichtung (1) nach einem der vorhergehenden Ansprüche, **dadurch gekennzeichnet, dass** die Antihaft-Nanobeschichtung (ANB) eine insbesondere mittels chemischer Nanotechnologie hergestellte Nanopartikelschicht ist.

4. Sensorvorrichtung (1) nach Anspruch 3, **dadurch gekennzeichnet, dass** die Antihaft-Nanobeschichtung (ANB) mittels eines Sol-Gel-Prozesses hergestellt ist.

5. Sensorvorrichtung (1) nach einem der vorhergehenden Ansprüche, **dadurch gekennzeichnet, dass** die Antihaft-Nanobeschichtung (ANB) optisch neutrale Eigenschaften aufweist.

6. Sensorvorrichtung (1) nach einem der vorhergehenden Ansprüche, **dadurch gekennzeichnet, dass** die Nanopartikel der Antihaft-Nanobeschichtung (ANB) eine Größe von kleiner 300 nm aufweisen.

7. Sensorvorrichtung (1) nach einem der vorhergehenden Ansprüche, **dadurch gekennzeichnet, dass** eine Lichtquelle vorgesehen ist, die zumindest auf ihrer durchleuchteten Außenoberfläche eine Antihaft-Nanobeschichtung (ANB) aufweist.

8. Sensorvorrichtung (1) nach einem der vorhergehenden Ansprüche, **dadurch gekennzeichnet, dass** wenigstens ein optisches Element zur Fokussierung eines Lichtstrahls vorgesehen ist, wobei zumindest dessen einer Lichtquelle abgewandten Oberfläche eine Antihaft-Nanobeschichtung (ANB) aufweist.

9. Sensorvorrichtung (1) nach einem der vorhergehenden Ansprüche, **dadurch gekennzeichnet, dass** der Sensor (2) ein optischer Sensor ist.

10. Sensorvorrichtung (1) nach einem der vorhergehenden Ansprüche, **dadurch gekennzeichnet, dass** dem Sensor (2) eine Drucklufteinrichtung (4) zugeordnet ist, die zumindest zur Reinigung der antihaftnanobeschichteten Oberfläche des Sensors (2) und/oder des Schutzglases (3) vorgesehen ist.

11. Druckmaschine, **gekennzeichnet durch** eine Sensorvorrichtung (1) nach einem der Ansprüche 1 bis 10.

12. Druckmaschine nach Anspruch 11, **dadurch gekennzeichnet, dass** die Sensorvorrichtung (1) in einem Farbwerk und/oder in einem Feuchtwerk, insbesondere im Bereich von Druck-, Form-, Film- oder Farbwalzen (6,7) und/oder im Bereich einer Papierbahn (B) angeordnet ist.

13. Verwendung einer Sensorvorrichtung (1) gemäß den Ansprüchen 1 bis 10 in einer Druckmaschine zum Herstellen von Druckerzeugnissen.
